# EUROPEAN PATENT APPLICATION

(11) **EP 4 621 995 A1**
(43) Date of publication of application: **24.09.2025**
(21) Application number: 23909986.4
(22) Date of filing: 05.12.2023
(51) Int. Cl.: H01Q 1/36, H01Q 1/50, H01Q 1/12, H01Q 1/22, H01Q 3/02, G01D 21/02

(54) **ANTENNA SYSTEM AND COMMUNICATION DEVICE**

(30) Priority: 26.12.2022 CN 202211678754
(71) Applicant: Huawei Technologies Co., Ltd., Shenzhen, Guangdong 518129 (CN)
(72) Inventor: CHEN, Shangmin, Shenzhen, Guangdong 518129 (CN); HE, Jinye, Shenzhen, Guangdong 518129 (CN); LI, Zongwei, Shenzhen, Guangdong 518129 (CN); LI, Yue, Shenzhen, Guangdong 518129 (CN); MI, Wenbo, Shenzhen, Guangdong 518129 (CN)
(74) Representative: Goddar, Heinz J.
(86) International application number: PCT/CN2023/136402
(87) International publication number: WO 2024/140056

(57) **Abstract**

This application provides an antenna system and a communication device, and relates to the field of communication technologies, to resolve problems of poor integration and a large size of an antenna system. The antenna system provided in this application includes a support, a first antenna, a second antenna, an engineering parameter detection apparatus, an angle detection apparatus, and a data processing apparatus. The first antenna is fastened to the support, and the second antenna is rotatably mounted on the support. The engineering parameter detection apparatus is configured to detect an azimuth of the first antenna. The angle detection apparatus is configured to detect an included angle between the first antenna and the second antenna. The data processing apparatus is configured to calculate an azimuth of the second antenna based on the azimuth detected by the engineering parameter detection apparatus and the included angle between the first antenna and the second antenna. In the example provided in this application, the azimuths of the first antenna and the second antenna can be obtained by using one engineering parameter detection apparatus and one angle detection apparatus. This helps reduce a quantity of used engineering parameter detection apparatuses, and facilitates a miniaturized and integrated design of the antenna system.

## Description

### CROSS-REFERENCE TO RELATED APPLICATIONS

This application claims priority to Chinese Patent Application No. 202211678754.3, filed with the China National Intellectual Property Administration on December 26, 2022 and entitled "ANTENNA SYSTEM AND COMMUNICATION DEVICE", which is incorporated herein by reference in its entirety.

### TECHNICAL FIELD

This application relates to the field of communication technologies, and in particular, to an antenna system and a communication device.

### BACKGROUND

A base station antenna is an important part of a wireless network, and a main function of the base station antenna is to implement wireless network coverage, so as to implement signal transmission between a wired communication network and a wireless terminal. With the continuous development of mobile communication technologies, the demands for multiple antennas, multiple frequency bands, and multiple standards are increasing. Therefore, a quantity and types of configured antennas are also increasing. However, site resources and antenna installation platform resources of base station antennas are limited. Therefore, how to dispose more antennas in limited space becomes an important development direction of base station antennas.

### SUMMARY

This application provides an antenna system that has a compact structure and is easy to implement a miniaturized and integrated design and a communication device.

According to a first aspect, this application provides an antenna system, and the antenna system may include a support, a first antenna, a second antenna, an engineering parameter detection apparatus, an angle detection apparatus, and a data processing apparatus. The first antenna is fastened to the support. The second antenna is rotatably mounted on the support. The engineering parameter detection apparatus is mounted on the first antenna, and is configured to detect a first azimuth of the first antenna. The angle detection apparatus is connected to the first antenna assembly and the second antenna assembly, and is configured to detect an included angle between the first antenna and the second antenna. The data processing apparatus is connected to the engineering parameter detection apparatus and the angle detection apparatus, and is configured to obtain a second azimuth of the second antenna through calculation based on the first azimuth detected by the engineering parameter detection apparatus and the included angle between the first antenna and the second antenna detected by the angle detection apparatus. In an example provided in this application, the azimuths of the first antenna and the second antenna can be obtained by using only one engineering parameter detection apparatus and an angle detection apparatus. Therefore, this helps reduce a quantity of used engineering parameter detection apparatuses, and facilitates a miniaturized and integrated design of the antenna system.

Certainly, during specific setting, the antenna system may include a plurality of second antennas. That is, the antenna system may include a plurality of antennas whose azimuths are adjustable.

In addition, during specific setting, rotation axes of the plurality of second antennas may coincide with each other, or may be arranged at an included angle. A quantity of angle detection apparatuses is the same as a quantity of second antennas, and the angle detection apparatuses and the second antennas are disposed in one-to-one correspondence, so as to detect an included angle between each second antenna and the first antenna, thereby learning an azimuth of each second antenna.

In an example, the first antenna may include a first reflective plate and a first element, the first reflective plate has a first reflective surface, and the first element is disposed on the first reflective surface. The second antenna may include a second reflective plate and a second element, the second reflective plate has a second reflective surface, and the second element is disposed on the second reflective surface. The first reflective plate is fastened to the support, and the second reflective plate is rotatably mounted on the support. A quantity and types of first elements included in the first antenna may be flexibly selected and set based on an actual requirement. Correspondingly, a quantity and types of second elements included in the second antenna may be flexibly selected and set based on an actual requirement. This is not limited in this application.

In an example, the angle detection apparatus may include a fastened arm, a movable arm, and a sensor. The fastened arm may be fastened to the support or the first antenna, and the movable arm may be rotatably mounted on the fastened arm. The movable arm is fastened to the second antenna, and a rotation axis of the movable arm coincides with a rotation axis of the second antenna. The sensor is connected to the fastened arm and the movable arm, and is configured to detect a relative angle between the fastened arm and the movable arm. When the second antenna rotates relative to the first antenna, the movable arm may rotate relative to the fastened arm, and the sensor may detect, based on an angle of rotation of the movable arm, an angle of rotation of the second antenna relative to the first antenna, so as to detect the included angle between the first antenna and the second antenna.

During specific setting, the antenna system may further include a driving mechanism. The driving mechanism is connected to the second antenna and is configured to drive the second antenna to rotate relative to the first antenna. The driving mechanism may be manual, or may be electric.

When the driving mechanism is of an electric type, the driving mechanism may include a motor and a transmission mechanism. The motor includes a stator and a rotor. The stator is fastened to the support, and the rotor is connected to the second antenna through the transmission mechanism. The transmission mechanism may include a gear, a rack, and the like. A specific type of the transmission mechanism is not limited in this application.

In addition, during specific setting, the engineering parameter detection apparatus may include a gyroscope, and the azimuth of the first antenna may be detected by using the gyroscope. Alternatively, in another example, the engineering parameter detection apparatus may include another device that can detect an azimuth.

In an example, the engineering parameter detection apparatus may further include at least one of a barometric pressure sensor, a temperature sensor, a humidity sensor, and a gravity accelerometer. In this way, a plurality of different types of engineering parameter information of the antenna system can be effectively detected.

In an example, the antenna system may further include a radome, and both the first antenna and the second antenna are located in the radome, so that the first antenna and the second antenna can be effectively protected.

According to a second aspect, this application further provides a communication device, including a radio frequency circuit and any one of the foregoing antenna systems. The radio frequency circuit is connected to elements on a first antenna and a second antenna, and is configured to feed the elements, to stimulate the elements to transmit electromagnetic waves. In an example provided in this application, a single antenna system has at least two antennas, and can provide azimuths in at least two different directions. Therefore, working performance and a coverage area of a base station are improved. During specific setting, a quantity and positions of disposed antenna systems may be flexibly selected and adjusted based on an actual requirement. This is not limited in this application.

### BRIEF DESCRIPTION OF DRAWINGS

FIG. 1 is a diagram of an application scenario of an antenna system according to an embodiment of this application;
FIG. 2 is a diagram of a structure of a base station antenna according to an embodiment of this application;
FIG. 3 is a block diagram of a structure of an antenna system according to an embodiment of this application;
FIG. 4 is a diagram of a three-dimensional structure of an antenna system according to an embodiment of this application;
FIG. 5 is a diagram of a three-dimensional structure of an antenna system from another perspective according to an embodiment of this application;
FIG. 6 is a block diagram of a structure of an antenna system according to an embodiment of this application;
FIG. 7 is a schematic top view of a structure of an antenna system according to an embodiment of this application;
FIG. 8 is a diagram of a three-dimensional structure of a support according to an embodiment of this application;
FIG. 9 is a diagram of a three-dimensional structure of an angle detection apparatus according to an embodiment of this application;
FIG. 10 is a diagram of a three-dimensional structure of another antenna system according to an embodiment of this application;
FIG. 11 is a diagram of a three-dimensional structure of another antenna system according to an embodiment of this application;
FIG. 12 is a diagram of a three-dimensional structure of a driving mechanism according to an embodiment of this application;
FIG. 13 is a diagram of a three-dimensional structure of a driving mechanism from another perspective according to an embodiment of this application;
FIG. 14 is a diagram of a three-dimensional structure of a driving mechanism from another perspective according to an embodiment of this application;
FIG. 15 is a diagram of a three-dimensional structure of a driving mechanism from another perspective according to an embodiment of this application;
FIG. 16 is a schematic exploded view of an antenna system according to an embodiment of this application; and
FIG. 17 is a diagram of a structure of a communication device according to an embodiment of this application.

### DESCRIPTION OF EMBODIMENTS

To make the objectives, technical solutions, and advantages of this application clearer, the following further describes this application in detail with reference to the accompanying drawings.

To facilitate understanding of the antenna system provided in embodiments of this application, the following first describes an application scenario of the antenna system.

An antenna provided in embodiments of this application may be used in a communication device such as a base station or radar, to implement a wireless communication function.

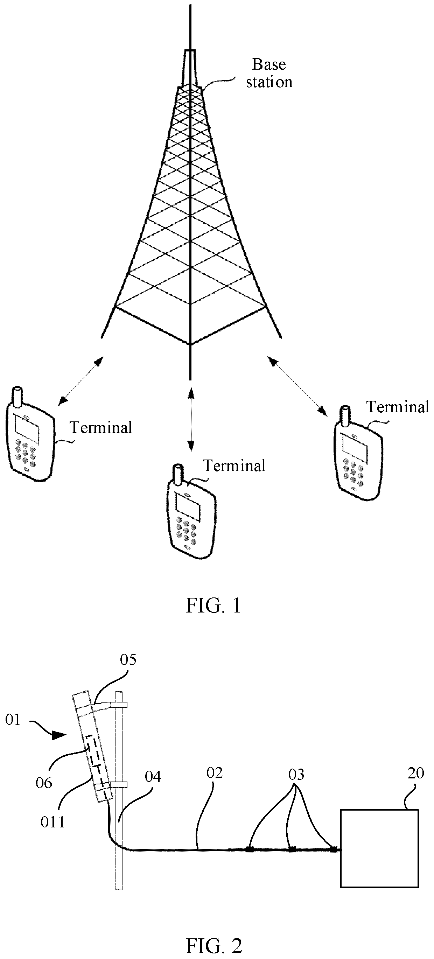

As shown in FIG. 1, the application scenario may include a base station and a terminal. Wireless communication may be implemented between the base station and the terminal. The base station may be located in a base station subsystem (base station subsystem, BBS), a terrestrial radio access network (UMTS terrestrial radio access network, UTRAN), or an evolved universal terrestrial radio access network (evolved universal terrestrial radio access network, E-UTRAN), and is configured to perform cell coverage of a radio signal, to implement communication between a terminal device and a wireless network. Specifically, the base station may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB, or eNodeB) in a long term evolution (long term evolution, LTE) system, or may be a radio controller in a cloud radio access network (cloud radio access network, CRAN) scenario. Alternatively, the base station may be a relay station, an access point, a vehicle-mounted device, a wearable device, a g node (gNodeB or gNB) in a new radio (new radio, NR) system, a base station in a future evolved network, or the like. This is not limited in embodiments of this application.

As shown in FIG. 2, a base station provided in embodiments of this application includes a base station antenna feeder system. In actual application, the base station antenna feeder system mainly includes an antenna system 01, a feeder 02, a grounding apparatus 03, and the like. The antenna system 01 is generally fastened on a pole 04, and a downtilt of the antenna system 01 may be adjusted through an antenna adjustment mounting bracket 05, to adjust a signal coverage area of the antenna system 01 to some extent.

In addition, the base station may further include a radio frequency processing unit 06 and a baseband processing unit 20. For example, the radio frequency processing unit 06 may be configured to: perform frequency selection, amplification, and down-conversion processing on a signal received by the antenna system 01, convert the signal into an intermediate frequency signal or a baseband signal, and send the intermediate frequency signal or the baseband signal to the baseband processing unit 20. Alternatively, the radio frequency processing unit 06 is configured to: perform up-conversion and amplification processing on an intermediate frequency signal sent by the baseband processing unit 20, convert the intermediate frequency signal into a radio signal through the antenna system 01, and send the radio signal. The baseband processing unit 20 may be connected to a feeding network of the antenna system 01 through the radio frequency processing unit 06. In some implementations, the radio frequency processing unit 06 may also be referred to as a remote radio unit (remote radio unit, RRU), and the baseband processing unit 20 may also be referred to as a baseband unit (baseband unit, BBU).

As shown in FIG. 2, in a possible embodiment, the radio frequency processing unit 06 may be integrated with the antenna system 01, the baseband processing unit 20 is located at a remote end of the antenna system 01, and the radio frequency processing unit 06 may be connected to the baseband processing unit 20 through the feeder 02. In another embodiment, both the radio frequency processing unit 06 and the baseband processing unit 20 may be located at a remote end of the antenna system 01.

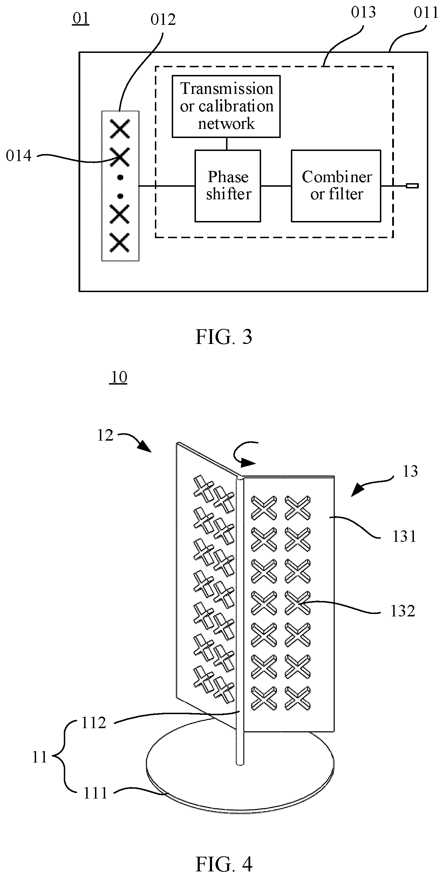

Refer to FIG. 2 and FIG. 3. The antenna system 01 used in the base station may further include a radome 011, and a reflective plate 012 and a feeding network 013 that are located in the radome 011. The reflective plate 012 may also be referred to as a bottom plate. A main function of the feeding network 013 is to feed a signal to a radiation assembly 014 based on a specific amplitude and phase, or send a radio signal received by the radiation assembly 014 to the baseband processing unit 20 of the base station based on a specific amplitude and phase. It may be understood that, during specific implementation, the feeding network 013 may include at least one of devices: a phase shifter, a combiner, a transmission or calibration network, a filter, or the like. Components and types of the feeding network 013 and functions that can be implemented by the feeding network 013 are not limited in this application.

Certainly, the antenna system 01 may be further used in a plurality of other types of communication devices. An application scenario of the antenna system 01 is not limited in this application.

For the radome 011, in terms of electrical performance, the radome 011 has good electromagnetic wave penetrability, so that normal sending and receiving of an electromagnetic wave between the radiation assembly 014 and the outside are not affected. In terms of mechanical performance, the radome 011 has good force-bearing performance and anti-oxidation performance, so that the radome 011 can withstand corrosion of an external harsh environment.

The radiation assembly 014 may also be referred to as a element, and is a unit that forms a basic structure of an antenna. The radiation assembly 014 can effectively transmit or receive an electromagnetic wave. The radiation assembly 014 may include a plurality of elements, and the plurality of elements may also form an array for use. During specific application, the elements may be classified into a single-polarization type, a dual-polarization type, and the like. During specific configuration, a type of the element may be properly selected based on an actual requirement.

Refer to FIG. 2. With wide application of a 5th generation mobile communication technology (5th generation mobile communication technology, 5G), operating frequency bands of base station antennas are increasing, and a quantity of antenna systems 01 installed on a pole 04 is increasing. However, due to limited installation positions and load bearing capacity of the pole 04, it is difficult to provide effective installation space for more antenna systems 01. In addition, if a quantity of poles 04 is increased, additional costs are added for an operator. In addition, in a city, site resources for installing poles 04 are also limited. Therefore, how to dispose more antennas in limited space becomes an important development direction of base station antennas.

Based on this, embodiments of this application provide an antenna system that has a compact structure and is easy to implement a miniaturized and integrated design.

To make the objectives, technical solutions, and advantages of this application clearer, the following further describes this application in detail with reference to the accompanying drawings and specific embodiments.

Terms used in the following embodiments are merely intended to describe specific embodiments, but are not intended to limit this application. Terms "one", "a", and "this" of singular forms used in this specification and the appended claims of this application are also intended to include a form like "one or more", unless otherwise specified in the context clearly. It may be further understood that, in the following embodiments of this application, "at least one" means one, two, or more.

Reference to "an embodiment" or the like described in this specification means that one or more embodiments of this application include a particular feature, structure, or characteristic described in combination with the embodiment. Therefore, in this specification, statements, such as "in an embodiment", "in some embodiments", and "in other embodiments", that appear at different places do not necessarily mean referring to a same embodiment, instead, the statements mean referring to "one or more but not all of embodiments", unless otherwise specifically emphasized in other ways. Terms "include", "have", and variants of the terms all mean "include but are not limited to", unless otherwise specifically emphasized in other ways.

As shown in FIG. 4, in an example provided in this application, an antenna system 10 may include a support 11, a first antenna 12, and a second antenna 13. The first antenna 12 is fastened to the support 11, and the second antenna 13 is rotatably mounted on the support 11. In the example provided in this application, the first antenna 12 and the second antenna 13 may be integrated into the single antenna system 10, thereby helping implement a miniaturized and integrated design of the antenna system 10. In addition, the first antenna 12 is fastened to the support 11. Therefore, in specific application, an installation posture of the antenna system 10 may be properly set according to an actual requirement of a network coverage area, to enable the first antenna 12 to have a required azimuth. In addition, the second antenna 13 is rotatably mounted on the support 11. Therefore, an azimuth of the second antenna 13 can be flexibly adjusted.

In actual application, an azimuth of an antenna may be obtained through manual measurement, or may be automatically detected by using a corresponding detection device.

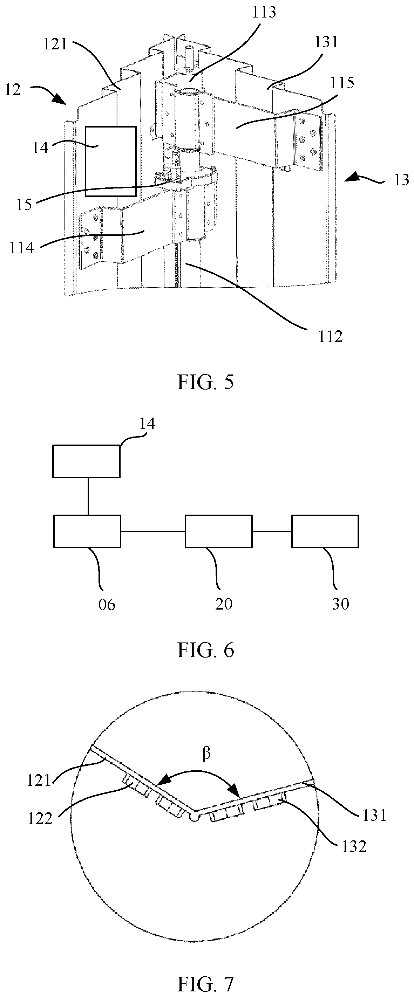

For example, as shown in FIG. 5, in the example provided in this application, the antenna system 10 further includes an engineering parameter detection apparatus 14, and the engineering parameter detection apparatus 14 may effectively detect the real azimuth of the first antenna 12. During specific setting, the engineering parameter detection apparatus 14 may include a gyroscope or another electronic device that can detect an azimuth. A specific type of the device included in the engineering parameter detection apparatus 14 may be properly selected according to an actual requirement. For example, the engineering parameter detection apparatus 14 may include a global positioning system (global positioning system, GPS), a barometric pressure sensor, a temperature sensor, a humidity sensor, a gravity accelerometer, a gyroscope, or the like. Specifically, the GPS may effectively detect parameters such as the latitude and longitude of a location of the antenna system 10, and a roll angle. The barometric pressure sensor may effectively detect barometric pressure of an environment in which the antenna system 10 is located. The temperature sensor may effectively detect a temperature of an environment in which the antenna system 10 is located. The humidity sensor may effectively detect a temperature of an environment in which the antenna system 10 is located. In specific application, the type of the device included in the engineering parameter detection apparatus 14 may be properly selected according to an actual requirement, and details are not described herein.

During specific setting, the engineering parameter detection apparatus 14 may be mounted on the back of a reflective plate 121 of the first antenna 12, so as to perform high-precision detection on parameters such as an azimuth of the first antenna 12. Alternatively, it may be understood that, because the first antenna 12 is fixedly mounted on the support 11, in some examples, the engineering parameter detection apparatus 14 may alternatively be mounted on the support 11, and the azimuth of the first antenna 12 can also be effectively detected.

An azimuth of an antenna has an important impact on network quality of mobile communication. In an aspect, an accurate azimuth can ensure that an actual coverage area of a base station is the same as an expected coverage area, thereby ensuring operation quality of an entire communication network. In another aspect, the azimuth may be adjusted appropriately according to a traffic volume or a specific situation of the network, so as to perform adaptive optimization on the existing mobile communication network. Therefore, the azimuths of the first antenna 12 and the second antenna 13 have an important impact on the antenna system 10 and a communication network formed by a plurality of antenna systems 10.

As shown in FIG. 6, in the antenna system 10, engineering parameter data detected by the engineering parameter detection apparatus 14 may be transmitted to the radio frequency processing unit 06, and then transmitted to the baseband processing unit 20 through the radio frequency processing unit 06. The baseband processing unit 20 may transmit the engineering parameter data to a network management platform 30 of an operator. The network management platform 30 may send a control signal to the antenna system 10 based on the obtained engineering parameter data, so as to effectively adjust a working status (such as a beam sweeping range) of the antenna system 10.

In addition, because the azimuths of the first antenna 12 and the second antenna 13 are different, only the azimuth of the first antenna 12 can be detected by using the device such as a gyroscope in the engineering parameter detection apparatus 14, and the azimuth of the second antenna 13 cannot be effectively detected.

As shown in FIG. 5, in an example provided in this application, the antenna system 10 further includes an angle detection apparatus 15 and a data processing apparatus (not shown in the figure). The azimuth of the second antenna 13 may be obtained by using the angle detection apparatus 15 and the data processing apparatus. Specifically, the angle detection apparatus 15 is connected to the first antenna 12 assembly and the second antenna 13 assembly, and is configured to detect an included angle between the first antenna 12 and the second antenna 13. For ease of understanding, the azimuth of the first antenna 12 is defined as a first azimuth, and the azimuth of the second antenna 13 is defined as a second azimuth in the following. The first azimuth of the first antenna 12 may be detected by the engineering parameter detection apparatus 14. The data processing apparatus is connected to the engineering parameter detection apparatus 14 and the angle detection apparatus 15, and is configured to calculate the second azimuth of the second antenna 13 based on the first azimuth detected by the engineering parameter detection apparatus 14 and the included angle between the first antenna 12 and the second antenna 13 detected by the angle detection apparatus 15.

For example, as shown in FIG. 7, it is assumed that the azimuth of the first antenna 12 is α1, and the included angle between the first antenna 12 and the second antenna 13 is β. In this case, the azimuth of the second antenna 13 is α2 = α1 + β.

In summary, in the example provided in this application, the azimuths of the first antenna 12 and the second antenna 13 may be obtained by using only one engineering parameter detection apparatus 14 and an angle detection apparatus 15. Therefore, this helps reduce a quantity of used engineering parameter detection apparatuses 14. Alternatively, it may be understood that, if the azimuths of the first antenna 12 and the second antenna 13 are respectively detected by using two engineering parameter detection apparatuses 14, a quantity of disposed engineering parameter detection apparatuses 14 is increased, thereby increasing manufacturing costs of the antenna system 10.

In addition, in actual application, the antenna system 10 may further include two or more second antennas 13, so that performance of the antenna system 10 can be improved. During specific setting, a quantity of angle detection apparatuses 15 may be correspondingly set according to a quantity of disposed second antennas 13. For example, when two second antennas 13 are disposed, two angle detection apparatuses 15 may be disposed in the antenna system 10, and each angle detection apparatus 15 may detect an included angle between a corresponding second antenna 13 and the first antenna 12. Therefore, an azimuth of each second antenna 13 can be obtained.

Alternatively, in another example, one of the angle detection apparatuses 15 may be configured to detect an included angle between one of the second antennas 13 and the first antenna 12. The other angle detection apparatus 15 may be configured to detect an included angle between the two second antennas 13. Azimuths of the two second antennas 13 may also be obtained through corresponding calculation. It should be noted that, when the antenna system 10 includes a plurality of second antennas 13, rotation axes of the plurality of second antennas 13 may coincide with each other, or may be arranged at an included angle. Details are not described herein.

In specific application, a quantity of disposed second antennas 13 and a manner of disposing the angle detection apparatus 15 are not limited in this application.

For ease of understanding, the following uses an example in which the antenna system 10 includes one first antenna 12 and one second antenna 13 for description.

As shown in FIG. 4 and FIG. 7, in an example provided in this application, the first antenna 12 includes a first reflective plate 121 and a first element 122, the first reflective plate 121 has a first reflective surface (not marked in the figure), and the first element 122 is disposed on the first reflective surface. The second antenna 13 includes a second reflective plate 131 and a second element 132, the second reflective plate 131 has a second reflective surface (not marked in the figure), and the second element 132 is disposed on the second reflective surface. The first antenna 12 and the second antenna 13 each may include a plurality of elements, and the plurality of elements may also form an array for use. During specific application, the elements may be classified into a single-polarization type, a dual-polarization type, and the like. During specific configuration, types of the first element 122 and the second element 132 may be properly selected according to an actual requirement, and details are not described herein.

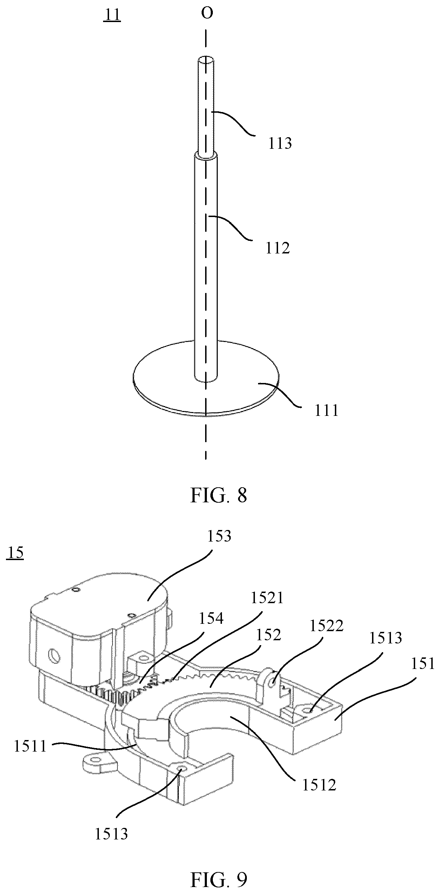

In addition, as shown in FIG. 8, in an example provided in this application, the support 11 includes a base 111 and a fixed cylinder 112 fastened to the base 111. One end (for example, a lower end in FIG. 8) of the fixed cylinder 112 is fastened to the base 111, and the other end (for example, an upper end in FIG. 8) is of an open structure. A rotating shaft 113 is disposed in the fixed cylinder 112, and can rotate around an axis O. The rotating shaft 113 and the fixed cylinder 112 may be assembled in a gap fitting manner, so that the rotating shaft 113 and the fixed cylinder 112 have high position precision. In addition, a specific gap also exists between the rotating shaft 113 and the fixed cylinder 112, so that the rotating shaft 113 can rotate smoothly relative to the fixed cylinder 112.

As shown in FIG. 5, a back side of the first reflective plate 121 is fastened to the fixed cylinder 112 by using a connecting plate 114, so as to implement a fixed connection between the first antenna 12 and the support 11. A back side of the second reflective plate 131 is fastened to the rotating shaft 113 by using a connecting plate 115, and the second reflective plate 131 can rotate around the fixed cylinder 112, thereby implementing a rotatable connection between the second antenna 13 and the support 11.

It may be understood that, in another example, the second antenna 13 may alternatively be rotatably mounted on the support 11 in another structure form. Details are not described herein.

In addition, as shown in FIG. 9, in an example provided in this application, the angle detection apparatus 15 includes a fastened arm 151, a movable arm 152, and a sensor 153. The fastened arm 151 is fastened to the first antenna 12, and the movable arm 152 is rotatably mounted on the fastened arm 151. The movable arm 152 is fastened to the second antenna 13, and a rotation axis of the movable arm 152 coincides with a rotation axis of the second antenna 13. The sensor 153 is connected to the fastened arm 151 and the movable arm 152, and is configured to detect a relative angle between the fastened arm 151 and the movable arm 152.

Specifically, in the example provided in this application, the fastened arm 151 has an arc-shaped sliding rail 1511, and the movable arm 152 has an arc-shaped sliding slot (not shown in the figure). The fastened arm 151 and the movable arm 152 can be connected in a rotatable manner through sliding cooperation between the sliding rail 1511 and the sliding slot.

In addition, the angle detection apparatus 15 further has a gear 154, and the movable arm 152 has a tooth-shaped portion 1521 engaged with the gear 154. The gear 154 is connected to a related component in the sensor 153. When the movable arm 152 rotates relative to the fastened arm 151, the gear 154 is driven to rotate, so that the gear 154 drives the related component in the sensor 153 to rotate, and therefore an angle of rotation of the movable arm 152 can be effectively detected, to implement a function of included angle detection.

In addition, the fastened arm 151 has a U-shaped groove 1512 and two connection holes 1513, and the movable arm 152 has a connection hole 1522.

As shown in FIG. 8 and FIG. 9, during installation, the fixed cylinder 112 may pass through the groove 1512, so that an axis of the sliding rail 1511 coincides with an axis of the fixed cylinder 112, and the rotation axis of the movable arm 152 coincides with the rotation axis of the second antenna 13. The fastened arm 151 may be fastened to the connecting plate 114 through the connection holes 1513, so as to implement a fixed connection between the fastened arm 151 and the first antenna 12. The movable arm 152 may be fastened to the connecting plate 115 through the connection hole 1522, so as to implement a fixed connection between the movable arm 152 and the second antenna 13.

When the second antenna 13 rotates relative to the first antenna 12, the movable arm 152 rotates relative to the fastened arm 151. Therefore, an angle of rotation of the second antenna 13 can be detected by using the sensor 153, so that an included angle between the second antenna 13 and the first antenna 12 can be learned.

It may be understood that, in the example provided in this application, the sensor 153 is a sensor 153 configured to detect a rotation angle. Therefore, when the gear 154 rotates, the related component in the sensor 153 may be driven to perform rotating motion, so that a rotation angle can be detected.

Certainly, in another example, the gear 154 in the angle detection apparatus 15 may alternatively be replaced with a rack, and the sensor 153 may alternatively be a sensor used for detecting linear motion. For example, when the movable arm 152 generates rotating motion, the rack engaged with the tooth-shaped portion 1521 may be enabled to generate straight-line motion. The rack may be connected to the related component in the sensor 153, and drive the related component in the sensor 153 to generate straight-line motion. An angle of rotation of the movable arm 152 may also be obtained through related calculation.

In summary, in specific application, the sensor 153 may be a sliding rheostat, a rotating rheostat, a magnetic sensor, or the like. A moving component may be a gear, a rack, or the like. A type of the sensor 153 and a specific structure type of the moving component (for example, a gear) are not limited in this application.

In addition, in actual application, the second antenna 13 may be rotated in a manual adjustment manner, to change an azimuth of the second antenna 13.

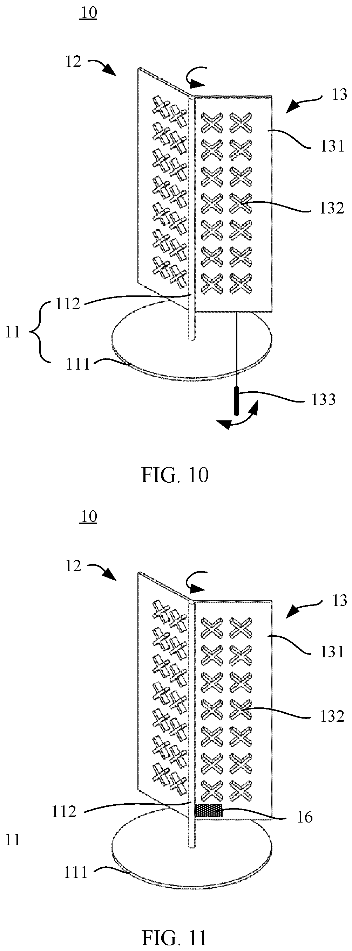

Specifically, as shown in FIG. 10, in an example provided in this application, the antenna system 10 further has a movable handle 133. The movable handle 133 may be fastened to the second reflective plate 131. After a hand holds the movable handle 133 and applies a torque, the rotating shaft 113 can rotate around the axis of the fixed cylinder 112, to adjust the azimuth of the second antenna 13.

Alternatively, the azimuth of the second antenna 13 may be flexibly adjusted in an electric adjustment manner.

For example, as shown in FIG. 11, the antenna system 10 further includes a driving mechanism 16.

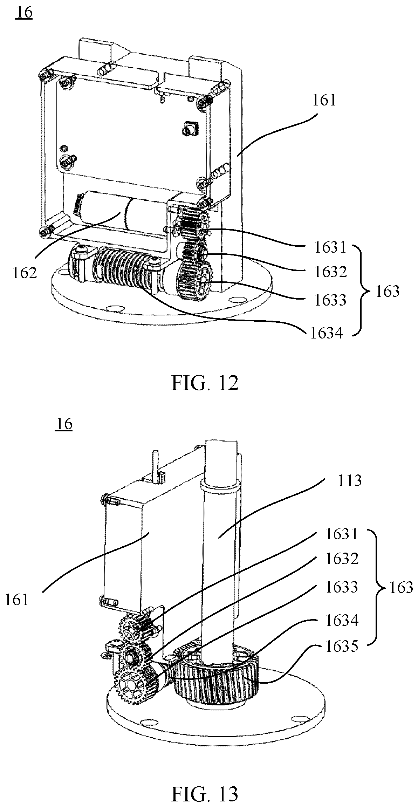

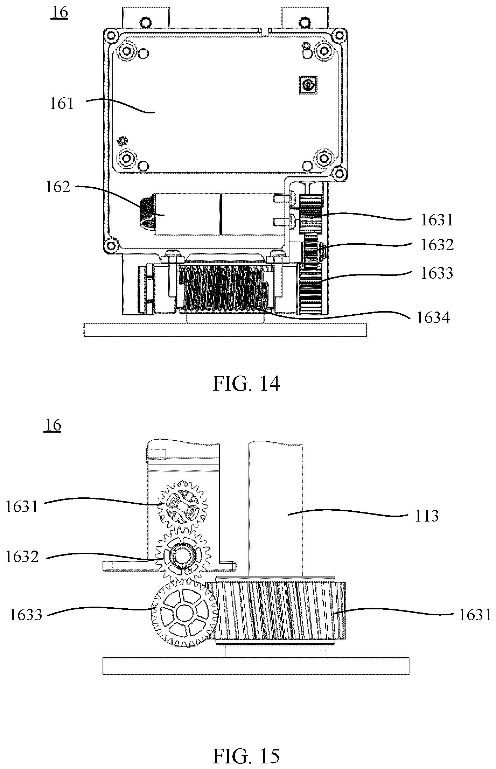

Specifically, as shown in FIG. 12 to FIG. 15, the driving mechanism 16 includes a housing 161, a motor 162, and a transmission mechanism 163. The motor 162 includes a stator and a rotor. The stator is fastened to the housing 161, the housing 161 is fixedly mounted on a back side of the first reflective plate 121, and the rotor is connected to the second antenna 13 through the transmission mechanism 163. When running, the motor 162 may drive the second antenna 13 to rotate relative to the first antenna 12. In addition, the transmission mechanism 163 includes a gear 1631, a gear 1632, a gear 1633, a screw 1634, and a gear 1635 that are engaged in sequence. The gear 1621 is fastened to the rotor of the motor 162. When the rotor rotates relative to the stator, the gear 1621 rotates synchronously with the rotor. In addition, the gear 1633 is fastened at one end of the screw 1634, and when the gear 1633 rotates, the screw 1634 may rotate synchronously. One end of the gear 1631 is fastened to the rotating shaft 113. When the gear 1631 rotates, the rotating shaft 113 may be driven to rotate synchronously, so that the second antenna 13 rotates, to change the azimuth of the second antenna 13.

It may be understood that, in another example, the transmission mechanism 163 may alternatively include a transmission structure such as a transmission belt. A type and a disposition manner of a transmission component in the transmission mechanism 163 are not limited in this application.

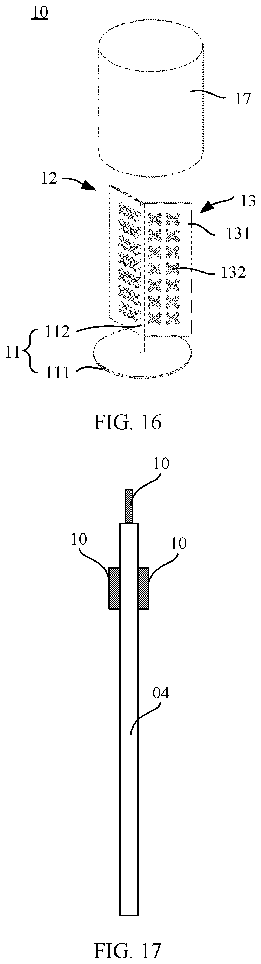

As shown in FIG. 16, during specific setting, the antenna system 10 may further include a radome 17, so that the first antenna 12 and the second antenna 13 can be effectively protected. The radome 17 may have various shapes.

For example, as shown in FIG. 16, in an example provided in this application, the radome 17 is a cylindrical structure in which a top end is closed and a bottom end is opened. The bottom end may be fastened to the base 111 of the support 11, to implement a fixed connection between the radome 17 and the support 11.

During specific implementation, the radome 17 and the support 11 may be fixedly connected through a screw, bonding, welding, or the like. A connection manner between the radome 17 and the support 11 is not limited in this application.

In addition, in another example, the radome 17 may alternatively be in another shape such as a square shape. Details are not described herein.

In addition, as shown in FIG. 17, an embodiment of this application further provides a communication device, including any one of the foregoing antenna systems 10. Specifically, the communication device is a base station, and includes a pole 04 mounted on the ground and an antenna system 10 (there are three shown in the figure). In the example provided in this application, a single antenna system 10 has at least two antennas, and azimuths in at least two different directions can be provided. Therefore, working performance and a coverage area of the base station are improved. During specific setting, a quantity and positions of disposed antenna systems 10 may be flexibly selected and adjusted based on an actual requirement. This is not limited in this application.

In addition, in specific application, the communication device may further include a radio frequency circuit. The radio frequency circuit may be connected to a element in the antenna system 10, and is configured to feed the element, so as to stimulate the element to transmit an electromagnetic wave. The radio frequency circuit may be connected to a feed point of the element in a plurality of manners. For example, the radio frequency circuit may include a structure such as a coaxial cable, a conducting wire, or a microstrip, to implement the connection to the feed point. Alternatively, the radio frequency circuit may feed the element in a coupling manner. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An antenna system, comprising:
a support;
a first antenna, fastened to the support;
a second antenna, rotatably mounted on the support;
an engineering parameter detection apparatus, mounted on the first antenna, and configured to detect a first azimuth of the first antenna;
an angle detection apparatus, connected to the first antenna and the second assembly, and configured to detect an included angle between the first antenna and the second antenna; and
a data processing apparatus, connected to the engineering parameter detection apparatus and the angle detection apparatus, and configured to obtain a second azimuth of the second antenna through calculation based on the first azimuth detected by the engineering parameter detection apparatus and the included angle between the first antenna and the second antenna detected by the angle detection apparatus.

2. The antenna system according to claim 1, wherein the first antenna comprises a first reflective plate and a first element, the first reflective plate has a first reflective surface, and the first element is disposed on the first reflective surface; and
the second antenna comprises a second reflective plate and a second element, the second reflective plate has a second reflective surface, and the second element is disposed on the second reflective surface; wherein
the first reflective plate is fastened to the support, and the second reflective plate is rotatably mounted on the support.

3. The antenna system according to claim 1 or 2, wherein the angle detection apparatus comprises a fastened arm, a movable arm, and a sensor;
the fastened arm is fastened to the support or the first antenna;
the movable arm is rotatably mounted on the fastened arm;
the movable arm is fastened to the second antenna, and a rotation axis of the movable arm coincides with a rotation axis of the second antenna; and
the sensor is connected to the fastened arm and the movable arm, and is configured to detect a relative angle between the fastened arm and the movable arm.

4. The antenna system according to any one of claims 1 to 3, wherein the antenna system further comprises a driving mechanism, and the driving mechanism is connected to the second antenna and is configured to drive the second antenna to rotate relative to the first antenna.

5. The antenna system according to claim 4, wherein the driving mechanism comprises a motor and a transmission mechanism; and
the motor comprises a stator and a rotor, the stator is fastened to the support, and the rotor is connected to the second antenna through the transmission mechanism.

6. The antenna system according to any one of claims 1 to 5, wherein the antenna system comprises a plurality of second antennas, and rotation axes of the plurality of second antennas coincide with each other; and
a quantity of angle detection apparatuses is the same as a quantity of second antennas, and the angle detection apparatuses and the second antennas are disposed in one-to-one correspondence.

7. The antenna system according to any one of claims 1 to 6, wherein the engineering parameter detection apparatus comprises a gyroscope, and the gyroscope is configured to detect the first azimuth of the first antenna.

8. The antenna system according to claim 7, wherein the engineering parameter detection apparatus further comprises at least one of a barometric pressure sensor, a temperature sensor, a humidity sensor, and a gravity accelerometer.

9. The antenna system according to any one of claims 1 to 8, further comprising a radome, wherein both the first antenna and the second antenna are located in the radome.

10. A communication device, comprising a radio frequency circuit and the antenna system according to any one of claims 1 to 9, wherein the radio frequency circuit is connected to the first antenna and the second antenna.
